(19) Europäisches Patentamt / European Patent Office / Office européen des brevets

(11) **EP 4 349 939 A1**

(12) **EUROPEAN PATENT APPLICATION**
published in accordance with Art. 153(4) EPC

(43) Date of publication:
**10.04.2024 Bulletin 2024/15**

(21) Application number: **21946136.5**

(22) Date of filing: **14.06.2021**

(51) International Patent Classification (IPC):
*C10G 1/00* (2006.01)   *C10G 1/10* (2006.01)
*C10G 32/02* (2006.01)   *C10G 15/08* (2006.01)
*F27B 1/10* (2006.01)   *C04B 35/119* (2006.01)
*C04B 35/553* (2006.01)

(52) Cooperative Patent Classification (CPC):
**C04B 35/119; C04B 35/553; C10G 1/00;
C10G 1/10; C10G 15/08; C10G 32/02; F27B 1/10;
Y02W 30/62**

(86) International application number:
**PCT/KR2021/007423**

(87) International publication number:
**WO 2022/265125 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Jeong, Yeong Hun
Seoul 03010 (KR)**

(72) Inventor: **Jeong, Yeong Hun
Seoul 03010 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **WASTE-SYNTHETIC-RESIN EMULSIFYING APPARATUS**

(57)   A waste-synthetic-resin emulsifying apparatus is disclosed. A waste-synthetic-resin emulsifying apparatus according to one embodiment of the present invention comprises: a pyrolysis furnace accommodating waste-synthetic-resin and simultaneously heating the waste-synthetic-resin and emitting ultraviolet rays to generate oil vapor, which is a heavy oil; a heat exchanger which is provided to communicate with the pyrolysis furnace, and which cools the oil vapor, which is a heavy oil, flowing in from the pyrolysis furnace, so as to convert same into a liquid heavy oil; and a storage tank which is provided to communicate with the heat exchanger, and which receives and stores the heavy oil converted by the heat exchanger.

FIG 1)

EP 4 349 939 A1

**Description**

**Technical Field**

The present invention relates to a waste synthetic resin emulsifying apparatus.

**Background Art**

In general, waste plastics made from materials, such as polyethylene, polypropylene, and polystyrene, have low recycling rates and are mostly treated by incineration or landfill.

Since the incineration or landfill of waste plastics causes serious environmental pollution, and requires a long time (for the waste plastics) to be decomposed into the natural state, there has been a demand for the development of environmentally friendly and economical waste plastic treatment technology.

Raw materials of waste synthetic resins, such as waste vinyl and waste plastics, are crude oil, and gasoline, diesel oil, and liquefied gas, which are also distilled and extracted from crude oil. The raw material of waste synthetic resin is a high molecular weight hydrocarbon polymer, and gasoline and diesel oil produced by oil refineries are relatively low molecular weight hydrocarbon polymers. Accordingly, it is possible to liquefy and crack waste synthetic resin and then convert the waste synthetic resin into oil.

For the cracking method, typically, a pyrolytic liquefaction process of heating polymers under oxygen-free conditions is used, but since pollutants are generated and wax, tar, coking, ash, aluminum foil, and heavy metals may be included in the manufactured oil, the use of the pyrolytic liquefaction process is currently prohibited due to low quality.

The conventional high-temperature pyrolytic liquefaction process includes supplying finely broken waste synthetic resin into a high-temperature melting furnace to melt the waste synthetic resin into a gel state, heating the gel-like molten liquid in a pyrolysis reactor to a high temperature of 450°C or higher to divide the molten liquid into gas and liquid, separating the wax component of heavy oil from the gas having an oil component, and condensing the gas from which the heavy oil is separated to obtain mixed heavy oil with high viscosity. The obtained mixed heavy oil is a main product to be produced in the pyrolytic process, and is a thick blackish-brown mixed oil, in which various heavy oil components having from low boiling point to high boiling point are mixed, and which has high viscosity, and contains lots of heavy metals, harmful substances, or the like.

For example, Patent Document 1 below discloses a 'Direct-heating type waste synthetic resin liquefaction apparatus using waste oil.'

The direct-heating type waste synthetic resin liquefaction apparatus using waste oil according to Patent Document 1 includes: a reactor to which waste synthetic resin and waste oil are supplied as raw materials, and where pyrolysis occurs under high temperature and pressure to generate gas; a first heating member which includes a first heating portion connected to the reactor through piping to heat the raw materials discharged from the reactor and to circulate the heated raw materials back to the reactor; and a cooling part cooling and condensing the gas generated from the reactor to extract regenerated oil.

In the reactor, gas is generated while the reactor is depressurized after pyrolysis under high temperature and pressure. In the first heating member, one end of the piping penetrates the side of the reactor and is connected to the inside of the reactor, and the other end is connected to the first heating portion. The reactor includes: a discharge pipe discharging the raw materials inside the reactor to the first heating portion; and a circulation pipe, of which one end is connected to the first heating portion and the other end is connected to the inside of the reactor, so as to circulate the heated raw materials to the reactor.

At the other end of the circulation pipe, first and second outlets are respectively formed to circulate the raw materials to the reactor, wherein the first outlet is used when the pyrolysis of the raw materials is carried out in the reactor, and the second outlet is used in the process of circulating the raw materials under depressurization after the pyrolysis in the reactor. The first outlet is formed so that an end of the first outlet is not widened outwardly, and the second outlet formed so that the end is widened outwardly, such that the circulating raw materials spread sideways and hit the inner wall of the reactor.

Patent Document 2 discloses a 'Waste synthetic resin Liquefaction Apparatus.'

The waste synthetic resin liquefaction apparatus according to Patent Document 2 includes: a heating furnace into which waste synthetic resin can be introduced and which can stir and pyrolyze the waste synthetic resin; a heat exchanger which is connected to the heating furnace, and cools and liquefies oil gas generated when the waste synthetic resin is pyrolyzed in the heating furnace to produce mixed oil; and a separation unit, connected to the heat exchanger and separates the mixed oil into light oil and heavy oil using boiling point differences.

The separation unit includes: an inclined flow path part, connected to the heat exchanger and inclined upward at a set angle; an auxiliary heating portion, installed at the front starting end side of the inclined flow path part, and heats the mixed oil; an auxiliary cooling part, installed behind the auxiliary heating portion in the inclined flow path part, and cools the vaporized mixed oil gas; a first branch flow path, connected to the inclined flow path part behind the auxiliary cooling part, and separates the heavy oil liquefied by the auxiliary cooling part; and a second branch flow path, connected to the end of the inclined flow path part, and separates the light oil liquefied by the auxiliary cooling part.

However, the conventional pyrolytic liquefaction process must heat the waste synthetic resin supplied to the reactor over 450°C using indirect heating in each process. Accordingly, the conventional pyrolytic liquefaction process has a problem in that heating time is relatively long and so the conventional liquefaction apparatus cannot rapidly process large amounts of waste synthetic resin.

**Patent Literature**

**Patent Documents**

Patent Document 1: Korean Patent Publication No. 10-2012-0019346
Patent Document 1: Korean Utility Model Publication No. 20-2012-0007128

**Disclosure**

**Technical Problem**

Accordingly, the present invention has been made in view of the above-mentioned problems occurring in the related art, and it is an object of the present invention to provide a waste synthetic resin liquefaction apparatus which rapidly produces mixed heavy oil ($C_{24}$ to $C_{60}$) by cracking decomposition of waste synthetic resin at a relatively low temperature.

**Technical Solution**

To accomplish the above-mentioned objects, according to the present invention, there is provided a waste synthetic resin liquefaction apparatus including: a pyrolysis furnace which accommodates waste synthetic resin, and generates heavy oil mist by heating the synthetic resin and irradiating the waste synthetic resin with ultraviolet rays; a heat exchanger, installed in communication with the pyrolysis furnace and cools the heavy oil mist introduced from the pyrolysis furnace to convert the heavy oil mist into liquid heavy oil; and a storage tank, installed in communication with the heat exchanger, and receiving and storing the converted heavy oil from the heat exchanger.

The pyrolysis furnace includes: a main body in which waste synthetic resin is accommodated; a plurality of heating units, provided inside the main body to heat the waste synthetic resin; an ultraviolet ray generating unit, provided inside the main body and is heated by the heating unit to emit ultraviolet rays to be irradiated on the waste synthetic resin; and an oil mist outlet, provided at the upper portion of the main body to discharge the generated heavy oil mist to the heat exchanger.

The heating unit heats the main body such that internal temperature of the main body reaches 180 to 270°C, and the ultraviolet ray generating unit is heated by the heating unit, and emits ultraviolet rays with a wavelength of 120 to 250 nm to decompose the hydrocarbon chains contained in the waste synthetic resin.

The ultraviolet ray generating unit further includes at least one ceramic composite accommodation part accommodating a plurality of ceramic composites. The ceramic composites are made by mixing, forming and sintering one or more ceramic powder particles selected from $Al_2O_3$, $ZrO_2$, and MgO, fluoride powder, one or more mixtures selected from LiF, MgF2, and CaF2, thermoluminescent rare earth phosphor material, one or more mixtures selected from Terbium (Tb), Cerium (Ce), Europium (Eu), and Dysprosium (Dy), and the ceramic composites emit ultraviolet rays with wavelengths ranging from 120 to 250 nm at temperatures between 180 and 270°C.

The ultraviolet ray generating unit further includes: a temperature sensor connected to the pyrolysis furnace to measure the internal temperature of the pyrolysis furnace; a pressure sensor connected to the pyrolysis furnace to measure the internal pressure of the pyrolysis furnace; and a control unit receiving temperature and pressure values measured by the temperature sensor and the pressure sensor and regulates the temperature of the heating unit.

The ultraviolet ray generating unit further includes a flow meter, connected to the heat exchanger to measure the flow rate of the heavy oil supplied from the heat exchanger to the storage tank and supply the measured flow rate value to the control unit, wherein the control unit stops the operation of the heating unit if the flow rate is below a set value.

**Advantageous Effects**

According to the present invention, the waste synthetic resin liquefaction apparatus can heat waste synthetic resin to vaporize into oil mist, heavy oil, through the direct cracking decomposition reaction using both photonic wave energy and thermal energy emitted from heating a ceramic composite with thermoluminescent properties, thereby obtaining mixed heavy oil ($C_{24}$ to $C_{60}$). By using both thermal energy and photonic wave energy, the the waste synthetic resin liquefaction apparatus can rapidly obtain heavy oil with high quality under relatively low temperature conditions, and can manufacture high-quality heavy oil through an environmentally friendly method, economical due to lower energy consumption and does not generate pollutants (such as dioxins) due to the low-temperature method.

**Description of Drawings**

FIG. 1 is a schematic diagram of a waste synthetic resin liquefaction apparatus according to an embodiment of the present invention.

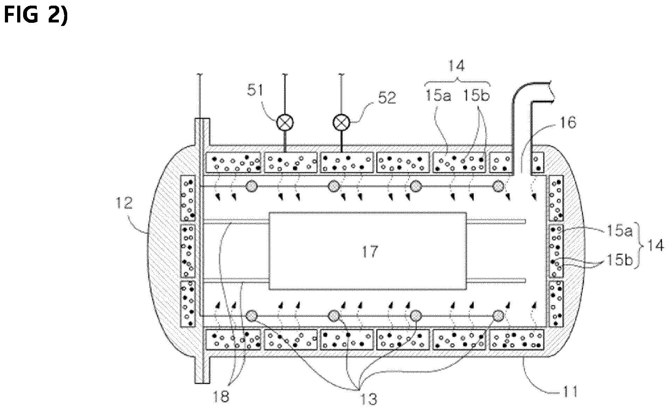

FIG. 2 is a view illustrating a pyrolysis furnace according to an embodiment of the present invention.

FIG. 3 is a graph showing the results of measuring the wavelength and intensity of light emitted from a ceramic composite according to an embodiment of the present invention.

FIG. 4 is a graph showing the results of thermogravimetric analysis to confirm the waste synthetic resin decomposition performance of the ceramic composite according to an embodiment of the present invention.

FIG. 5 is a graph showing the results of thermogravimetric analysis to confirm the waste synthetic resin decomposition performance of the ceramic composite according to an embodiment of the present invention.

FIG. 6 is a graph showing a gas chromatograph-mass spectrometer (GC-MS) analysis spectrum of heavy oil produced according to an embodiment of the present invention.

**Mode for Invention**

Hereinafter, with reference to the accompanying drawings and embodiments, the present invention will now be described in more detail. The terms and descriptions written below are merely illustrative for clarifying the present invention and should not be construed as limiting the scope of the invention.

The terms, "first", "second", etc., used in the description of the present invention, are used only to distinguish one component from another. For example, without departing from the scope of the present invention, a first component could be named as a second component, and similarly, a second component could be named as a first component. The term, "and/or", includes any combination of a plurality of related listed items or any of the plurality of related listed items.

The words or terms used in the present invention are used to describe specific embodiments of the present invention, and there is no intent to limit the present invention. The singular form of the components may be understood into the plural form unless otherwise specifically stated in the context. It should be understood that the terms of 'include' or 'have' in the specification are used to mean that there are characteristics, numbers, steps, operations, components, parts, or combinations of the steps, operations, components and parts described in the specification and there is no intent to exclude existence or possibility of other characteristics, numbers, steps, operations, components, parts, or combinations of the steps, operations, components and parts.

Unless otherwise defined, it will be understood that all terms used in the specification including technical or scientific terms has the same meanings as to be generally or commonly understood by those of ordinary skill in the art. It will be further understood that words or terms described as the meaning defined in commonly used dictionaries shall be interpreted as having meanings that are consistent with their meanings in the context of the relevant art and the technical idea of the invention, and shall not be interpreted as having ideal meanings or excessively formal meanings, not otherwise particularly stated.

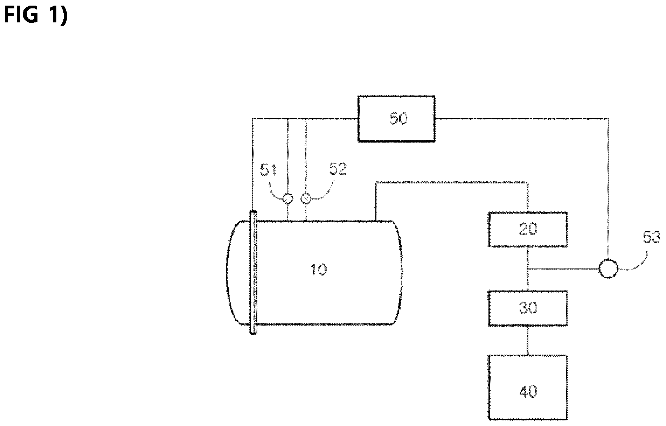

FIG. 1 is a schematic diagram of a waste synthetic resin liquefaction apparatus according to an embodiment of the present invention.

Referring to FIG. 1, the waste synthetic resin liquefaction apparatus according to an embodiment of the present invention includes: a pyrolysis furnace 10 which accommodates waste synthetic resin, and generates heavy oil mist by heating the synthetic resin and irradiating the waste synthetic resin with ultraviolet rays; a heat exchanger 20, installed in communication with the pyrolysis furnace 10 and cools the heavy oil mist introduced from the pyrolysis furnace 10 to convert the heavy oil mist into liquid heavy oil; and a storage tank 40, installed in communication with the heat exchanger 20, and receiving and storing the converted heavy oil from the heat exchanger 20.

The waste synthetic resin liquefaction apparatus according to an embodiment of the present invention is to generate heavy oil mist by decomposing waste synthetic resin and liquefy the generated heavy oil mist to obtain heavy oil, thereby extracting heavy oil from the waste synthetic resin.

Unlike the conventional pyrolysis liquefaction process that required a high-temperature process of over 450°C, the waste synthetic resin liquefaction apparatus of the present invention can rapidly decompose large amounts of waste synthetic resin at relatively low temperature through thermal energy and wave energy of irradiated ultraviolet rays, thereby producing large amount of heavy oil within a short period of time.

Here, the waste synthetic resin may include waste plastics, waste vinyl, etc., and refers to thermoplastic resins that can be cracked into low molecular substances by heat.

The thermoplastic resins may be, for instance, polyethylene, polypropylene, polystyrene, ABS resin, acrylonitrile styrene, polyethylene terephthalate, polybutylene terephthalate, polyphenylene sulfide, polyphenylene oxide, polyacetal, polycarbonate, acrylic resin, nylon, polyamide, Teflon, synthetic rubber, polyvinyl chloride, etc.

Here, the heavy oil can be defined as a wax-containing oil, for instance, bunker C oil.

The waste synthetic resin liquefaction apparatus according to an embodiment of the present invention includes a pyrolysis furnace 10 and a heat exchanger 20, and will be described in terms of components as follows.

The pyrolysis furnace 10 according to an embodiment of the present invention is to generate heavy oil mist by receiving and heating waste synthetic resin.

The pyrolysis furnace 10 may include: a main body 11 in which waste synthetic resin is accommodated; a plurality of heating units 13 which are provided inside the main body 11 to heat the waste synthetic resin; an ultraviolet ray generating unit 14, provided inside the main body 11 and is heated by the heating unit 13 to emit ultraviolet rays to be irradiated on the waste synthetic resin; and an oil mist outlet 16, provided at the upper portion of the main body 11 to discharge the generated heavy oil mist to the heat exchanger 20.

The main body 11 can be formed in a cylindrical or cuboid shape to allow the introduction of waste synthetic resin and.

The waste synthetic resin can be loaded on a cart 17 and moved to the main body 11 through an inlet 12 provided on one side of the pyrolysis furnace 10, and rails 18 for the movement of the cart 17, on which the waste synthetic resin is loaded, can be installed on the inner bottom surface of the main body 11.

The heating unit 13 heats the main body 11 such that internal temperature of the main body 11 reaches 180 to 270°C, and the ultraviolet ray generating unit 14 is heated by the heating unit 13 and may emit ultraviolet rays with a wavelength of 120 to 250 nm to decompose the hydrocarbon chains contained in the waste synthetic resin.

The heating units 13 which can raise the internal temperature of the main body 11 to between 180 and 270°C are installed inside the main body 11. The heating units 13 can be plate-shaped or cylindrical.

For example, the heating units 13 can be plate-shaped and installed on both inner side walls and the bottom surface of the main body 11 at regular intervals, or one or the plurality of heating units 13 can be cylindrical and installed adjacent to the inner wall of the main body 11 and arranged vertically or horizontally to the bottom surface of the main body singly or at regular intervals. The form of the heating unit 13 is not limited thereto, and can be appropriately designed and changed considering the shape, capacity, and target temperature of the pyrolysis furnace 10.

The ultraviolet ray generating unit 14 includes at least one ceramic composite accommodation part 15a accommodating a plurality of ceramic composites 15b.

The ceramic composites 15b are made by mixing, forming and sintering one or more ceramic powder particles selected from $Al_2O_3$, $ZrO_2$, and MgO, fluoride powder, one or more mixtures selected from LiF, MgF2, and CaF2, thermoluminescent rare earth phosphor material, one or more mixtures selected from Terbium (Tb), Cerium (Ce), Europium (Eu), and Dysprosium (Dy). The ceramic composites 15b can emit ultraviolet rays with wavelengths ranging from 120 to 250 nm at temperatures between 180 and 270°C.

More specifically, the ultraviolet ray generating unit 14 can be installed inside the pyrolysis furnace 10 to emit ultraviolet rays, thereby breaking down the hydrocarbon chains contained in the waste synthetic resin. The ultraviolet ray generating unit 14 can be installed on the internal walls of the main body 11 in the form of tiles or blocks.

The ultraviolet ray generating unit 14 includes at least one ceramic composite accommodation part 15a which accommodates the plurality of ceramic composites 15b. The ceramic composite accommodation part 15a is made of a material that can withstand the heat from the heating unit 13 without blocking the ultraviolet rays emitted from the accommodated ceramic composites 15b, for example, a metal mesh.

The ceramic composites 15b emit ultraviolet rays with wavelengths of 120 to 250 nm, which corresponds to UV-C, at temperature of 180 to 270°C due to the thermofluorescent properties. The emitted UV-C wavelengths exist discontinuously within the 120 to 250 nm range, and correspond to pulse waves with strong wave energy. The wave energy of the emitted ultraviolet rays (pulse waves), when converted according to wavelength, corresponds to 989 to 480 kJ/mol.

The carbon-carbon single bond (C-C) energy contained in polymers, such as polyethylene, polypropylene, and polystyrene, which are typically included in the waste synthetic resin, is 347 kJ/mol. Therefore, the ultraviolet rays emitted from the ceramic composites 15b have sufficient energy to cause direct cracking of the carbon-carbon single bonds.

Therefore, unlike the conventional pyrolytic liquefaction process which required a high-temperature process of over 450°C, the waste synthetic resin liquefaction apparatus of the present invention can decompose the waste synthetic resin even at the relatively low temperature of 180 to 270°C by adding thermal energy to the wave energy emitted from the ceramic composites 15b, thereby shortening the heating time and reducing the energy required to maintain high temperature over 450°C. Furthermore, unlike the process that use only thermal energy to decompose waste synthetic resin, the waste synthetic resin liquefaction apparatus of the present invention uses not only thermal energy but also wave energy by ultraviolet irradiation, thereby allowing for faster decomposition of the waste synthetic resin and rapid production of a significant amount of heavy oil.

Additionally, the conventional high-temperature pyrolytic process has a problem in that, since coke, tar, and ash are generated and deposited on the inner walls of the pyrolysis reactor, the residues attached on the inner wall of the reactor must be removed for the next work, so the reactor cannot be operated continuously. However, the waste synthetic resin liquefaction apparatus of the present invention operates at relatively low temperature, and prevents the formation of coke, tar, and ash, thus solving these issues.

Moreover, high-temperature pyrolytic process inevitably involve the release of harmful substances like dioxins and dust. However, the low-temperature process of the present invention does not emit harmful substances, is environmentally friendly, and is economical by saving costs required for the prevention and recovery of harmful substance emissions.

The hydrocarbon chains contained in the waste synthetic resin are decomposed by the thermal energy supplied from the heating unit 13 and the wave energy of the ultraviolet rays emitted from the ceramic composites 15b, and the hydrocarbon chains with reduced molecular weight mostly vaporize into heavy oil mist with carbon numbers ranging from 24 to 60.

A manufacturing method of the ceramic composites 15b will be described in more detail. The ceramic composites 15b can be produced by mixing and shaping the ceramic powder, the fluoride powder, and the thermoluminescent rare earth phosphor material to form a molded body; and sintering the molded body at a temperature of 1300 to 1450°C.

The ceramic composites 15b can have a plate shape or a spherical shape with a diameter of 8 to 15 mm, but are not limited thereto. The form of the ceramic composites 15b can be appropriately selected for ease of installation.

The mist outlet 16 discharges the heavy oil mist vaporized by the thermal and wave energy. Considering the upward movement of the vaporized heavy oil mist, it is preferable to install the mist outlet 16 at the top of the main body 11, but the present invention is not limited thereto.

The pyrolysis furnace 10 can include a hydraulic cylinder for internal sealing. The pyrolysis furnace 10, when sealed by the hydraulic cylinder, prevents the ingress of external air to create an oxygen-free atmosphere. Therefore, no additional reactions occur other than the cracking of carbon bonds in the waste synthetic resin by the ultraviolet rays emitted from the ceramic composites 15b. As a result, there is no need for a pretreatment process for the waste synthetic resin, no pollutants are generated, and the decomposition residues are transformed into carbon lumps resembling charcoal. Inorganic or metallic impurities not decomposed by the ceramic composites 15b can be separated from the decomposition residues and collected separately, and the decomposition residues can be reused as high-calorific solid fuel due to their high carbon content.

The main body 11 may have an outlet formed at the lower portion thereof to discharge foreign matter or moisture contained in the waste synthetic resin.

Additionally, the waste synthetic resin liquefaction apparatus can further include: a temperature sensor 51 connected to the pyrolysis furnace 10 to measure the internal temperature of the pyrolysis furnace 10; a pressure sensor 52 connected to the pyrolysis furnace 10 to measure the internal pressure of the pyrolysis furnace 10; and a control unit 50 receiving temperature and pressure values measured by the temperature sensor 51 and the pressure sensor 52 and regulates the temperature of the heating unit 13.

The temperature sensor 51 and the pressure sensor 52 are installed to be easily connected to the interior of the pyrolysis furnace 10 for measuring its internal temperature and pressure.

The control unit 50 can recognize the measured temperature and pressure values from the temperature sensor 51 and the pressure sensor 52, and control the heating unit 13 to increase the temperature when the temperature and pressure are excessively high, and decrease the temperature when the measured temperature and pressure are excessively low.

The heat exchanger 20 according to an embodiment of the present invention is communicated with the pyrolysis furnace 10, and is provided to cool and liquefy the heavy oil mist introduced from the pyrolysis furnace 10 to produce heavy oil.

The heat exchanger 20 can be connected to the mist outlet 16 of the pyrolysis furnace 10. The heat exchanger 20 may include a cooling water tank storing cooling water, and the heavy oil mist introduced into the heat exchanger 20 can be cooled and liquefied by losing heat by the cooling water tank and converted into heavy oil.

Since the heat exchanger 20 is made up of well-known technology in the industry, further detailed description of the heat exchanger 20 is omitted.

The waste synthetic resin liquefaction apparatus may further include a flow meter 53, connected to the heat exchanger 20 to measure the flow rate of the heavy oil supplied from the heat exchanger 20 to the storage tank 40 and supply the measured flow rate value to the control unit 50. The control unit 50 can stop the operation of the heating unit 13 if the flow rate is below a set value.

When the flow rate of heavy oil measured by the flow meter 53 falls below a certain threshold, it means that the heavy oil mist extractable from the waste synthetic resin is depleted. At this point, the control unit 50 can stop the operation of the heating unit 13 to terminate the waste synthetic resin liquefaction process. The set value can be varied depending on the amount of waste synthetic resin fed into the pyrolysis furnace 10. For example, when 6000 kg of waste synthetic resin is fed, the set value can be set at 100 l/hr.

The control unit 50 is preferably the same as the one previously described that receives temperature and pressure values from the temperature sensor 51 and the pressure sensor 52, and can operate automatically or manually.

The waste synthetic resin liquefaction apparatus may further include an oil-water separator 30, installed in communication with the heat exchanger 20 to remove moisture contained in the heavy oil supplied from the heat exchanger 20 and supply the dehydrated heavy oil to the storage tank 40.

The oil-water separator 30 separates the moisture contained in the liquefied heavy oil using gravity based on density difference or centrifugal separation.

Since the oil-water separator 30 is made up of well-known technology in the industry, further detailed description of the oil-water separator 30 is omitted.

The produced heavy oil is transported and stored into the storage tank 40 connected to the heat exchanger or the oil-water separator 30.

Due to the aforementioned configuration, the waste synthetic resin liquefaction apparatus of the present invention can decompose the carbon-carbon bonds contained in waste plastics using the wave energy of ultraviolet rays emitted from the ceramic composites 15b even at the low temperature of 180 to 270°C. The hydrocarbons with reduced carbon numbers can be effectively vaporized into heavy oil mist. The generated oil mist yields high-quality heavy oil with carbon numbers ranging from $C_{24}$ to $C_{60}$ through the cooling and liquefaction processes.

Hereinafter, the operation and preferred embodiments of the waste synthetic resin liquefaction apparatus of the present invention will be described in detail.

Waste synthetic resin is automatically loaded onto the cart 17 and is introduced into the pyrolysis furnace 10. The waste synthetic resin is packed in six vinyl bags and loaded three each onto two carts 17, and then, introduced into a decomposition furnace 10. After loading, the inlet 12 is sealed using a hydraulic cylinder, and once the flow rate of the cooling water in the heat exchanger 20 reaches a steady state, the operation of the heating unit 13 starts.

The heating unit 13 has a cylindrical shape, and 12 heating units are installed on both sides of the inside of the main body 11 by six units in the vertical direction to the bottom surface thereof, and 24 heating units are installed on the bottom surface of the inside of the main body 11 in the horizontal direction to the bottom surface thereof.

The initial internal temperature of the main body 11 is set at 60°C, and after the waste synthetic resin is introduced, the heating unit 13 operates to raise the internal temperature of the main body 11 to 270°C.

The ultraviolet ray generating unit 14 positioned adjacent to the heating units 13 installed on the upper and both side surfaces inside the main body 11 absorbs thermal energy, and the ceramic composites 15b accommodated in the ceramic composite accommodation part 15a emit ultraviolet rays with wavelengths of 120 to 250 nm. The emitted ultraviolet rays decompose the carbon bonds in the waste synthetic resin, and the waste synthetic resin is evaporated into heavy oil mist with carbon numbers 24 to 60, and then is discharged through the mist outlet 16 located on one side of the top of the pyrolysis furnace 10.

The discharged heavy oil mist is cooled and condensed into liquid heavy oil while passing through the heat exchanger 20. The heavy oil is then supplied to the oil-water separator 30, which removes a small amount of moisture contained in the heavy oil. The heavy oil, passed through the oil-water separator 30, is supplied and stored in the storage tank.

The flow meter 53 connected to the heat exchanger 20 measures the flow rate of the produced heavy oil and supplies the measured result to the control unit 50. When the flow rate decreases below a certain level, the control unit 50 stops the operation of the heating unit 13 to end the process.

**Experimental Example 1: Ultraviolet Ray Emission Measurement of Ceramic Composites**

To analyze the ultraviolet ray emission characteristics of the ceramic composites, the wavelength and intensity of the rays emitted at temperature of 180 to 270°C were measured.

The ceramic composites were prepared as follows. Based on 100 parts by weight of ceramic powder which was ground to a mesh #2400 or finer, and consists of alumina ($Al_2O_3$), zirconia ($ZrO_2$), and magnesia (MgO) each with a purity of 99.99% or higher, 7 parts by weight of fluoride powder, in which LiF, MgF2, and CaF2 were mixed, and 3 parts by weight of thermoluminescent rare earth material, in which terbium oxide ($Tb_3O$), dysprosium oxide ($Dy_2O_3$), and cerium oxide (CeO2) were mixed, were mixed. The mixture was formed into a spherical shape with 10 mm diameter, and then sintered at 1400°C to produce the ceramic composites.

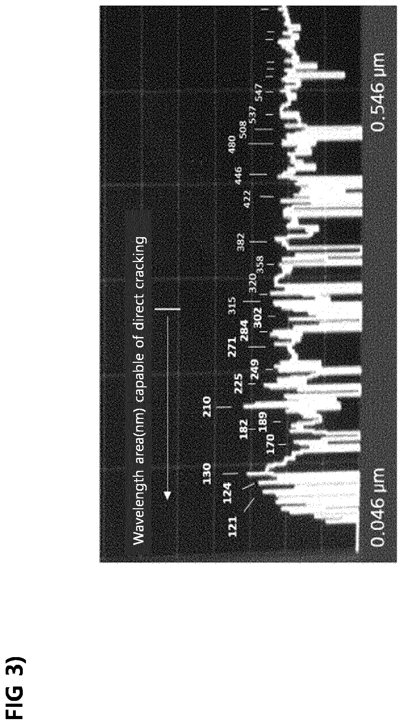

FIG. 3 is a graph showing the results of measuring the wavelength and intensity of light emitted when heating the ceramic composites to temperature of 180 to 270°C. As illustrated in FIG. 3, ultraviolet rays with wavelengths in the range of 120 to 250 nm were emitted, with a discontinuous wavelength distribution (121, 124, 130, 220, 225, and 249 nm) within the wavelength range.

Meanwhile, Table 1 below shows the bond energies according to the types of chemical bonds which exist in mixed plastics, such as polyethylene, polypropylene, and polystyrene, commonly contained in waste synthetic resin. Table 2 shows the converted wave energy values according to the wavelength of light emitted from the ceramic composites. The conversion was carried out through the following Mathematical Formula 1.

[Mathematical Formula 1]

$$E = \frac{h \times c}{\lambda}$$

Here, E represents energy, h is Planck's constant ($6.626 \times 10^{-34}$ J/s), c is the speed of light ($3 \times 10^8$ m/s), and $\lambda$ is the wavelength.

[Table 1]

| Bond Type | Bond Energy (kJ/mol) |
|---|---|
| C=C (Carbon-Carbon Double Bond) | 607 |
| C-H (Carbon-Hydrogen Bond) | 431 |
| C-Cl (Carbon-Chlorine Bond) | 397 |
| C-C (Carbon-Carbon Single Bond) | 347 |
| C-S (Carbon-Sulfur Bond) | 259 |

[Table 2]

| Light Wavelength (nm) | Converted Wave Energy (kJ/mol) |
|---|---|
| 121 | ~989 |
| 124 | ~965 |
| 130 | ~920 |
| 220 | ~704 |
| 225 | ~532 |
| 249 | ~480 |

As can be seen in Tables 1 and 2, the wave energy of light with wavelengths of 120 to 250 nm is greater than the bond energy of the most common carbon-carbon single bond (347 kJ/mol) in waste synthetic resin. Therefore, it was confirmed that the light emitted from the ceramic composites had sufficient energy to decompose the carbon-carbon single bonds in waste synthetic resin.

**Experimental Example 2: Thermogravimetric Analysis**

To verify the decomposition performance of the ceramic composites on waste synthetic resin, thermogravimetric analysis (TGA) was conducted.

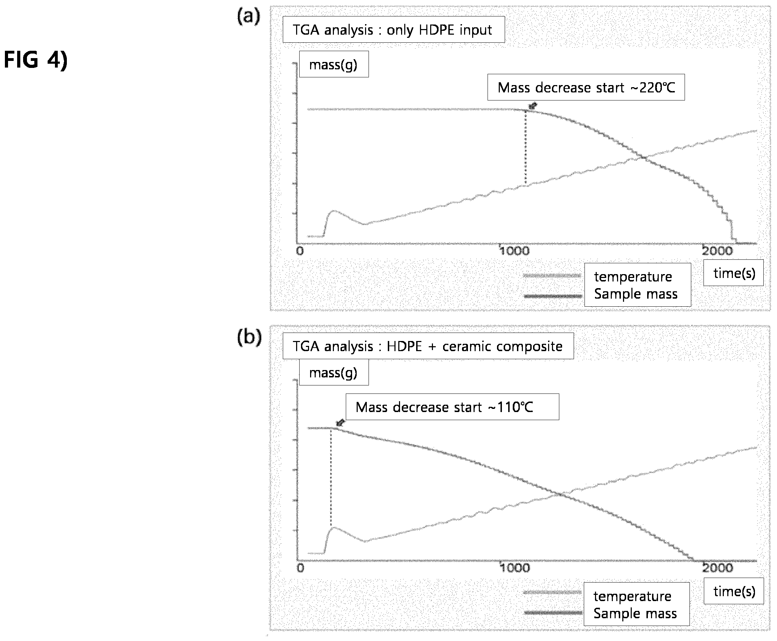

A sample of high-density polyethylene (HDPE) alone was introduced into the thermogravimetric analyzer and heated at a rate of 2°C/min to measure the weight. Moreover, the weight was measured under the same conditions, except that the HDPE sample was introduced along with the ceramic composites. The analysis results are shown in FIG. 4. FIG. 4a shows the thermogravimetric analysis result of the HDPE sample alone, and FIG. 4b shows the result for the HDPE sample with ceramic composites.

As shown in Figures 4a and 4b, when only the HDPE sample was introduced, it was observed that mass was decreased starting at a temperature of 220°C. However, when the ceramic composites were also introduced, the mass decrease started at a temperature of 110°C.

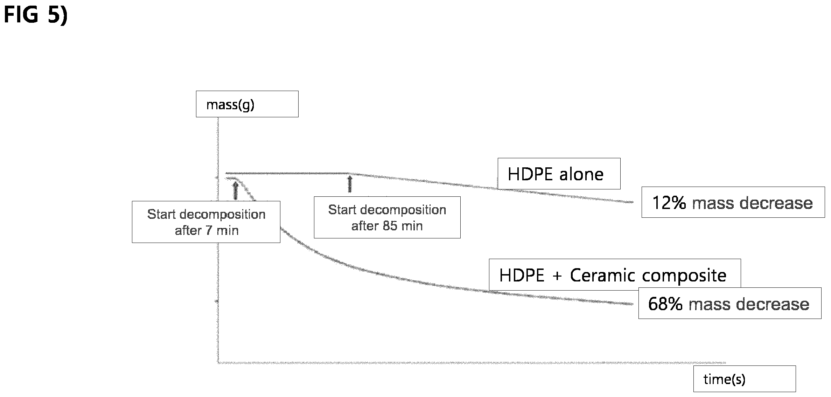

Additionally, thermogravimetric analysis of the high-density polyethylene sample alone was conducted for 300 minutes at a constant temperature of 250°C, and the same analysis was conducted for the HDPE sample with ceramic composites for comparison. The results of the analyses are shown in FIG. 5.

As shown in FIG. 5, when only the high-density polyethylene sample was introduced, the mass decrease began after 85 minutes, and after the analysis, a 12% weight reduction was observed compared to the initial sample weight.

In contrast, when the ceramic composites were also introduced, decomposition began in just 7 minutes, and after the analysis, there was a 68% weight reduction compared to the initial sample weight.

Therefore, through the thermogravimetric analysis results, it was confirmed that the ceramic composites could decompose a large amount of synthetic resin at a lower temperature and at a faster rate.

**Experimental Example 3: Properties and Component Analysis of Product**

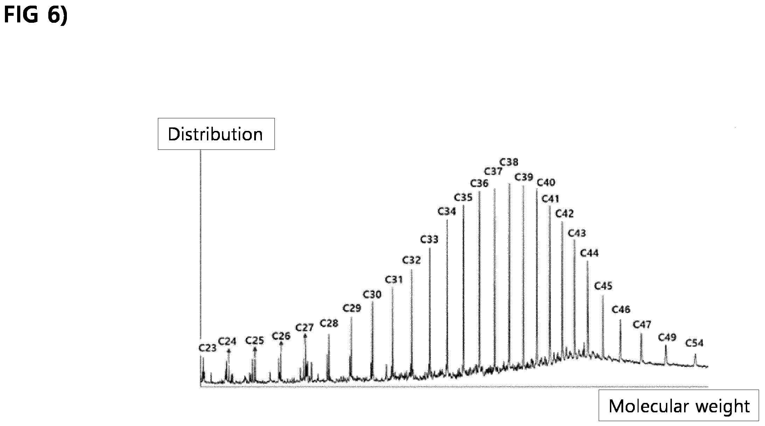

According to the preferred embodiment of the waste synthetic resin liquefaction apparatus, heavy oil was produced from waste synthetic resin, and the properties and components of the produced heavy oil and residues were analyzed. The results of the analysis of the properties of the produced heavy oil are shown in Table 3, and FIG. 6 shows a gas chromatograph-mass spectrometer (GC-MS) analysis spectrum of the produced heavy oil. In addition, the analysis results of the properties and components of the residues are shown in Table 4.

[Table 3]

| Test Item | Test Result |
|---|---|
| Physical State | Liquid at 20°C |
| Softening Point (Closed type) | 50°C |
| Firing Point | not self-ignite below 200°C |
| pH | 4.8 ~ 5.8 |
| Specific Gravity | 0.9 at 20°C |
| Water Solubility | Insoluble at 20°C |
| Spontaneous Ignition Test | not self-ignite at 20°C |
| Water Reactivity Test | No water reactivity hazard at 20°C |
| Oxidation Test | Combustion Time: > 300 s at 20°C * Hazard Criteria: ≤ 135 s |

[Table 4]

| Category | Unit | Measurement Value |
|---|---|---|
| Moisture | wt.% | ≤ 5 |
| Lower Heating Value | kcal/kg | ≥ 5,000 |
| Ash Content | wt.% | ≤ 15.0 |
| Chlorine Content | wt. % | ≤ 1.5 |
| Sulfur Content | wt. % | ≤ 0.5 |
| Mercury(Hg) | mg/kg | ≤ 1.0 |
| Cadmium (Cd) | mg/kg | ≤ 3.0 |
| Lead (Pb) | mg/kg | ≤ 100.0 |
| Arsenic (As) | mg/kg | ≤ 10.0 |

As shown in Table 3, high-viscosity liquid heavy oil was produced at room temperature, and it was found that the produced heavy oil had no problem in the spontaneous ignition test, water reactivity test, and oxidation test, so could be produced in safety. Additionally, as indicated by the GC-MS measurement results in FIG. 6, the produced heavy oil exhibited a carbon number distribution of $C_{23}$ to $C_{54}$, and it was confirmed that the produced heavy oil contained a significant amount of paraffinic wax components in the range of $C_{34}$ to $C_{44}$.

Meanwhile, as shown in Table 4, the residue remaining after the production of heavy oil was a charcoal-like black solid, which contained small amounts of moisture, ash, chlorine, sulfur, and metallic components such as mercury, cadmium, lead, and arsenic. Specifically, the residue exhibited a lower heating value of over 5000 kcal/kg, so could be used as a solid fuel.

Therefore, from the above results, it was confirmed that the waste synthetic resin liquefaction apparatus according to a preferred embodiment of the present invention could produce high-quality heavy oil, and the residue could be used as a solid fuel.

The embodiments are examples for describing the present invention, and the present invention is not limited thereto. It will be apparent to those skilled in the art that various modifications can be made to the above-described exemplary embodiments of the present invention. Therefore, it will be understood that the technical scope of the present invention should be determined by the attached claims.

Industrial Applicability

The waste synthetic resin liquefaction apparatus according to the present invention can rapidly produce mixed heavy oil ($C_{24}$ to $C_{60}$) by cracking decomposition of waste synthetic resin at a relatively low temperature.

**Claims**

1. A waste synthetic resin emulsifying apparatus comprising:

   a pyrolysis furnace which accommodates waste synthetic resin, and generates heavy oil mist by heating the synthetic resin and irradiating the waste synthetic resin with ultraviolet rays;
   a heat exchanger, installed in communication with the pyrolysis furnace and cools the heavy oil mist introduced from the pyrolysis furnace to convert the heavy oil mist into liquid heavy oil; and
   a storage tank, installed in communication with the heat exchanger, and receiving and storing the converted heavy oil from the heat exchanger.

2. The waste synthetic resin emulsifying apparatus according to claim 1, wherein the pyrolysis furnace comprises:

   a main body in which waste synthetic resin is accommodated;
   a plurality of heating units, provided inside the main body to heat the waste synthetic resin;
   an ultraviolet ray generating unit, provided inside the main body and is heated by the heating unit to emit ultraviolet rays to be irradiated onto the waste synthetic resin; and
   an oil mist outlet, provided at the upper portion of the main body to discharge the generated heavy oil mist to the heat exchanger.

3. The waste synthetic resin emulsifying apparatus according to claim 2, wherein the heating unit heats the main body such that internal temperature of the main body reaches 180 to 270°C, and
   wherein the ultraviolet ray generating unit is heated by the heating unit, and emits ultraviolet rays with a wavelength of 120 to 250 nm to decompose the hydrocarbon chains contained in the waste synthetic resin.

4. The waste synthetic resin emulsifying apparatus according to claim 3, wherein the ultraviolet ray generating unit includes at least one ceramic composite accommodation part accommodating a plurality of ceramic composites, and

   wherein the ceramic composites are made by mixing, forming and sintering one or more ceramic powder particles selected from $Al_2O_3$, $ZrO_2$, and MgO, fluoride powder, one or more mixtures selected from LiF, $MgF_2$, and $CaF_2$, thermoluminescent rare earth phosphor material, one or more mixtures selected from Terbium (Tb), Cerium (Ce), Europium (Eu), and Dysprosium (Dy), and
   wherein the ceramic composites emit ultraviolet rays with wavelengths ranging from 120 to 250 nm at temperatures between 180 and 270°C.

5. The waste synthetic resin emulsifying apparatus according to claim 2, further comprising:

a temperature sensor connected to the pyrolysis furnace to measure the internal temperature of the pyrolysis furnace;

a pressure sensor connected to the pyrolysis furnace to measure the internal pressure of the pyrolysis furnace; and

a control unit receiving temperature and pressure values measured by the temperature sensor and the pressure sensor and regulates the temperature of the heating unit.

6. The waste synthetic resin emulsifying apparatus according to claim 5, further comprising:

a flow meter, connected to the heat exchanger to measure the flow rate of the heavy oil supplied from the heat exchanger to the storage tank and supply the measured flow rate value to the control unit,

wherein the control unit stops the operation of the heating unit if the flow rate is below a set value.

EP 4 349 939 A1

FIG 1)

12

FIG 2)

FIG 3)

**FIG 4)**

(a)

TGA analysis : only HDPE input

mass(g)

Mass decrease start ~220℃

| temperature
| Sample mass

0        1000        2000        time(s)

(b)

TGA analysis : HDPE + ceramic composite

mass(g)

Mass decrease start ~110℃

| temperature
| Sample mass

0        1000        2000        time(s)

## FIG 5)

mass(g)

Start decomposition after 7 min

Start decomposition after 85 min

HDPE alone

12% mass decrease

HDPE + Ceramic composite

68% mass decrease

time(s)

EP 4 349 939 A1

**FIG 6)**

## INTERNATIONAL SEARCH REPORT

| International application No. |
| --- |
| **PCT/KR2021/007423** |

| A. CLASSIFICATION OF SUBJECT MATTER |
| --- |
| **C10G 1/00**(2006.01)i; **C10G 1/10**(2006.01)i; **C10G 32/02**(2006.01)i; **C10G 15/08**(2006.01)i; **F27B 1/10**(2006.01)i; **C04B 35/119**(2006.01)i; **C04B 35/553**(2006.01)i |
| According to International Patent Classification (IPC) or to both national classification and IPC |

| B. FIELDS SEARCHED |
| --- |
| Minimum documentation searched (classification system followed by classification symbols) |
| C10G 1/00(2006.01); B09B 3/00(2006.01); B29B 13/02(2006.01); C08J 11/10(2006.01); C10B 47/44(2006.01); C10G 1/10(2006.01); C10G 11/12(2006.01); C10J 3/57(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 자외선(ultra violet, UV), 열분해(pyrolysis), 열교환(heat exchange), 가스(gas), 폐기물(waste) |

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 08-100183 A (TOSHIBA CORP.) 16 April 1996 (1996-04-16)<br>See claims 1-15; paragraphs [0051]-[0140]; and figure 1. | 1-6 |
| Y | KR 10-2060395 B1 (YIREH ETS CO., LTD.) 30 December 2019 (2019-12-30)<br>See claim 5; paragraph [0035]; and figures 1-6. | 1-6 |
| A | KR 10-1890415 B1 (ECO CREATION INDUSTRIES, CO., LTD.) 21 August 2018 (2018-08-21)<br>See entire document. | 1-6 |
| A | KR 10-2003-0010364 A (KIM, Dong Chun) 05 February 2003 (2003-02-05)<br>See entire document. | 1-6 |
| A | KR 10-2014-0118417 A (SHIN, Kwang Sup) 08 October 2014 (2014-10-08)<br>See entire document. | 1-6 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 March 2022** | **14 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/007423** |

**C.    DOCUMENTS CONSIDERED TO BE RELEVANT**

| Category* | Citation of document, with indication, where appropriate, of the relevant passages | Relevant to claim No. |
| --- | --- | --- |
| E | KR 10-2021-0131145 A (JUNG, Young Hoon) 02 November 2021 (2021-11-02)<br>See claims 1-6; and figures 1-6. | 1-6 |

Form PCT/ISA/210 (second sheet) (July 2019)

**INTERNATIONAL SEARCH REPORT**
**Information on patent family members**

International application No.

**PCT/KR2021/007423**

| Patent document cited in search report | | | Publication date (day/month/year) | Patent family member(s) | | | Publication date (day/month/year) |
|---|---|---|---|---|---|---|---|
| JP | 08-100183 | A | 16 April 1996 | None | | | |
| KR | 10-2060395 | B1 | 30 December 2019 | None | | | |
| KR | 10-1890415 | B1 | 21 August 2018 | None | | | |
| KR | 10-2003-0010364 | A | 05 February 2003 | CN | 1398952 | A | 26 February 2003 |
| KR | 10-2014-0118417 | A | 08 October 2014 | KR | 10-1475785 | B1 | 23 December 2014 |
| KR | 10-2021-0131145 | A | 02 November 2021 | None | | | |

Form PCT/ISA/210 (patent family annex) (July 2019)

**EP 4 349 939 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120019346

- KR 2020120007128